# EUROPEAN PATENT APPLICATION

(11) **EP 4 300 397 A1**
(43) Date of publication of application: **03.01.2024**
(21) Application number: 22305937.9
(22) Date of filing: 28.06.2022
(51) Int. Cl.: G06Q 20/22, G06Q 20/34, G06Q 20/40

(54) **METHOD FOR MANAGING A CARD**

(71) Applicant: THALES DIS FRANCE SAS, 92190 Meudon (FR)
(72) Inventor: PALADJIAN, Pierre, 13190 Allauch (FR); SOUCHON, Pierre, 13600 La Ciotat (FR); SALLES, Jean-Luc, 13720 La Bouilladisse (FR)
(74) Representative: Grevin, Emmanuel

(57) **Abstract**

The invention is a method for managing card (10) participating to a payment transaction with a terminal. The card comprises a profile data set (51) defining two or more card payment profiles, and is configured to have at most one activated card payment profile at a time. The card comprises a payment profile repository (52) comprising two or more records (91), each of said records comprising a profile field (11) identifying a card payment profile, and one or more criterion fields (12), each of the criterion fields identifying a selection criterion. The method comprises the following steps:
- getting a transaction parameter (71) intrinsic to the payment transaction,
- identifying a target record comprising a selection criterion matching said transaction parameter then activating the card payment profile identified by the target record; and
- performing internal treatments required for participating to the payment transaction using the activated card payment profile.

## Description

### (Field of the invention)

The present invention relates to methods for managing a card. It relates particularly to methods for operating a smart card to perform a payment transaction in conjunction with a Point-Of-Sale terminal.

### (Background of the invention)

Smart cards are portable small devices comprising a memory, a microprocessor and an operating system for computing treatments. They may comprise services applications like Payment, Access or Telecom applications. Such smart cards may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode.

Contact smart cards are designed to communicate according to at least one contact protocol like ISO/IEC7816 T=0 or T=1 communication protocols. Contactless smart cards are designed to communicate according to at least one contactless protocol like a protocol defined by ISO/IEC 14443 standard.

### (Summary of the Invention)

Until today, when a payment smart card is delivered to a cardholder (i.e. the genuine user), the card has been previously personalized with a unique hardcoded payment profile which specifies the behavior of the card during a payment transaction. For instance, the issued payment card may be either a debit card or a credit card. If the cardholder wants to change the type of a physical payment card, the only possibility is to contact the card issuer (i.e. their bank) and to get a new physical payment card that replaces the previous one.

Such a process is costly and time-consuming since it implies building a new smart card.

There is need to allow a user to dynamically change the payment profile of their payment card.

The invention aims at solving the above mentioned technical problem.

An object of the present invention is a card comprising a hardware processor and a memory and able to participate to a payment transaction with a terminal coupled to the card. The card comprises a profile data set defining two or more card payment profiles. The card is configured to have at most one activated card payment profile at a time. The card comprises a payment profile repository comprising two or more records, each of said records comprising a profile field identifying a card payment profile belonging to the profile data set, and one or more criterion fields, each of the criterion fields identifying a selection criterion. The card comprises a selection engine configured to get, during said payment transaction, a transaction parameter intrinsic to said payment transaction, to identify, in the payment profile repository, a target record comprising a selection criterion matching said transaction parameter and to activate the card payment profile identified by the target record. The card comprises a payment engine configured to perform internal treatments required for participating to the payment transaction using the activated card payment profile.

Advantageously, the activated card payment profile may be one of the group comprising: immediate debit, deferred debit, purse, short-term credit, a long-term credit and a multi-maturity credit.

Advantageously, the transaction parameter may be one of the group comprising: an identifier of a merchant, a type of merchant, an amount, a date and a location.

Advantageously, the selection criterion may be one of the group comprising: an identifier of a merchant, a type of merchant, a range of amounts, a range of dates, a range of times and a location list.

Advantageously, when no target record has been identified in the payment profile repository, the selection engine may be configured to activate a predefined default card payment profile belonging to said profile data set.

Advantageously, the card may comprise an admin engine configured to update the payment profile repository according to a personalization data provided by a portable device communicably coupled to the card.

Advantageously, when no target record has been identified in the payment profile repository, said selection engine may be configured to establish a wireless communication channel with a portable device and to request said personalization data from the portable device.

Advantageously, said selection engine may be configured to establish a wireless communication channel with a portable device then wait for a predefined duration before beginning to identify the target record in the payment profile repository.

Advantageously, each record of the payment profile repository may comprise a priority field identifying a priority level. When at least two found records comprise a selection criterion matching the transaction parameter, the selection engine may be configured to activate the card payment profile identified by the found record whose priority level is the highest.

Another object of the present invention is a method for managing card participating to a payment transaction with a terminal coupled to the card. The card comprises a profile data set defining two or more card payment profiles, the card being configured to have at most one activated card payment profile at any given time. The card comprises a payment profile repository comprising two or more records, each of said records comprising a profile field identifying a card payment profile belonging to the profile data set, and one or more criterion fields, each of the criterion fields identifying a selection criterion. The method comprises the steps:
- a selection engine embedded in the card gets, during said payment transaction, a transaction parameter that is intrinsic to said payment transaction,
- the selection engine identifies, in the payment profile repository, a target record comprising a selection criterion matching said transaction parameter,
- the selection engine activates the card payment profile identified by the target record; and
- a payment engine embedded in the card performs internal treatments required for participating to the payment transaction using the activated card payment profile.

Advantageously, when no target record has been identified in the payment profile repository, said selection engine may activate a predefined default card payment profile belonging to said profile data set.

Advantageously, the card may comprise an admin engine that updates the payment profile repository according to a personalization data provided by a portable device communicably coupled to the card.

Advantageously, when no target record has been identified in the payment profile repository, said selection engine may establish a wireless communication channel with a portable device and request said personalization data from the portable device.

Advantageously, said selection engine may establish a wireless communication channel with a portable device then wait for a predefined duration before beginning to identify the target record in the payment profile repository.

Advantageously, each record of the payment profile repository may comprise a priority field identifying a priority level and, when at least two found records comprise a selection criterion matching the transaction parameter, the selection engine may activate the card payment profile identified by the found record whose priority level is the highest.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows a first exemplary flow diagram for processing an operation in a payment card according to an example of the invention;
Fig. 2 shows a diagram of architecture of a payment card according to an example of the invention;
Fig. 3 shows a first example of payment profile repository embedded in a payment card according to an example of the invention; and
Fig. 4 shows a second example of payment profile repository embedded in a payment card according to another example of the invention.

### (Detailed description of the preferred embodiments)

The invention may apply to any type of payment card. The invention is well suited for physical payment cards and may also apply to digital payment cards.

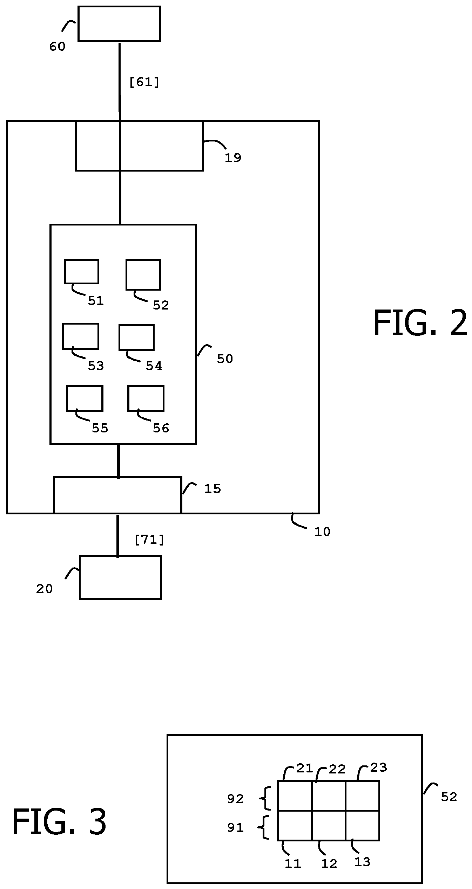

Figure 2 depicts a diagram of architecture of a payment card according to an example of the invention.

In this example, the card 10 is a payment smart card allocated to a user.

The card 10 comprises a secure chip 50 (also called secure element) and a communication interface 19 which is designed to exchange data with outside in wireless mode. For instance, the communication interface 19 may be compliant with Bluetooth Low Energy^{©} (BLE), Wi-Fi or NFC (Near Field Communication) technology. The communication interface 19 is linked to the secure element 50.

The card 10 comprises a physical communication interface 15 able to communicate and operate according to ISO/IEC 7816 standard. In some embodiments, the physical communication interface 15 may be configured to communicate and operate according a contactless protocol complying with ISO/IEC 14443 standard for example.

The secure chip 50 comprises a hardware processor and a non-volatile memory (not shown). The non-volatile memory stores an operating system 56 that includes software instructions that are executed by the processor to perform the features of the secure chip. The secure element 50 is based on a conventional smart card chip with additional features. The secure element 50 may be able to contribute to a banking transaction with an external machine. For instance, the transaction may be a payment transaction or cash withdrawal.

As shown at Figure 2, the card 10 may be communicably coupled to a portable device 60 that may be a smartphone or a laptop for instance.

In the example of Figure 2, the card 10 is communicably coupled to a Point-Of-Sale (POS) terminal 20 through the physical communication interface 15.

The secure element 50 comprises program instructions intended to be executed by the processor of the secure element to perform treatments required by the invention.

The secure element 50 comprises a profile data set 51 defining two or more card payment profiles. Each card payment profile may correspond to immediate debit, deferred debit, purse, short-term credit, a long-term credit and a multi-maturity credit. Each card payment profile contains the parameter value(s) specifying the behavior of the card when the card payment profile is activated in the card. For example, a multi-maturity credit payment profile may specify the number of maturities, their periodicity and an interest rate.

The card is configured to have at most one activated card payment profile at any given time. In other words, the card has either no activated card payment profile or one activated card payment profile.

The secure element 50 comprises a payment profile repository 52 comprising two or more records. Each of said records comprising a profile field that identifies a card payment profile belonging to the profile data set 51, and one or more criterion fields. Each of the criterion fields identifies a selection criterion.

A selection criterion can be an identifier of merchant, a type of merchant, a range of amounts, a range of dates, a range of times or a location list for example. The location list can list a group of place/country or describe a geographical area (ex: Europe or Latin America).

The secure element 50 comprises a selection engine 53 configured to get, during a payment transaction, at least one transaction parameter 71 intrinsic to the payment transaction, to identify, in the payment profile repository 52, a target record comprising a selection criterion matching said transaction parameter and to activate the card payment profile identified by the target record. A transaction parameter matches a selection criterion if the transaction parameter satisfies a condition/rule specified by the selection criterion.

The transaction parameter 71 may be an identifier of a merchant (e.g. the name or a reference uniquely assigned to the merchant), a type of merchant, an amount, a date or a location (of the POS terminal).

In some embodiments, the selection engine 53 may be configured to get more than one transaction parameter that are intrinsic to the payment transaction. For example, the selection engine 53 may get the transaction amount and the transaction date.

The POS terminal may send to the card the transaction parameters using any appropriate (standardized or proprietary) format. For instance the POS terminal may send the transaction parameters in the Processing options Data Objects List data (PDOL data) of a Get Processing Options (GPO) command of EMV^{©} flow.

When activating the relevant payment profile, the selection engine 53 may send to the POS terminal a response to the GPO command containing an Application Interchange Profile/Application File Locator (AIP/AFL) pair depending on the relevant payment profile.

The AFL (Application File Locator) allows providing the POS terminal with the list of records to be read. Having multiple sets of AFLs is well suited for some embodiments of the invention. Keeping same AFL but internally referencing other records with same Identifier is an option for some other embodiments.

AIP (Application Interchange Profile) provides the POS terminal with a list of functions/mechanisms supported by the card (like DDA or CVM verification). Thus, an advantage of some embodiments is to allow activation of different card functionalities upon profile. For instance, request for PIN entry could be deactivated when the card communicates in contact mode with the POS terminal for a payment transaction at a bakery or below an amount of 10 Euros.

The secure element 50 comprises a payment engine 54 configured to perform internal treatments required for participating to the payment transaction using the card payment profile activated by the selection engine 53. The payment engine 54 may be a conventional payment application implemented by software.

In some embodiments, the card can remain with the card payment profile activated beyond the payment transaction.

In some embodiments, the card can deactivate the card payment profile activated after the payment transaction.

Figure 3 depicts a first example of payment profile repository 52 embedded in a payment card according to an example of the invention.

The payment profile repository 52 may be a table (also named Profile Selection Table) or a file comprising at least records 91 and 92. The record 91 comprises at least one criterion field 12 and a profile field 11 identifying a card payment profile. In some embodiments, the record 91 may comprise a priority field 13 identifying a priority level.

Similarly, the record 92 comprises at least one criterion field 22 and a profile field 21 identifying a card payment profile belonging to the profile data set 51. In some embodiments, the record 92 may comprise a priority field 23 identifying a priority level.

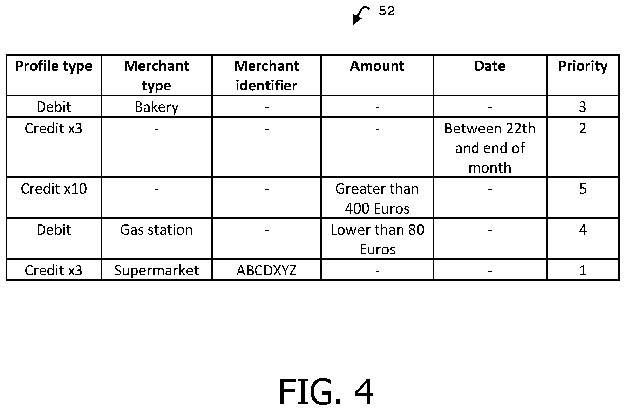

Figure 4 depicts a second example of payment profile repository 52 embedded in a payment card according to an example of the invention.

The payment profile repository 52 may be a file comprising five records.

Each record has six fields. The first field specifies a type of card payment profile.

The fields 2-5 are criterion fields while the field 6 specifies a priority level.

The first record relates to a card payment profile of debit type with one criterion field specifying that the merchant type is Bakery and a priority level set to 3.

The second record relates to a card payment profile of "credit x3" type with one criterion field specifying a range of date (Between 22th and end of month) and a priority level set to 2. A "credit x3" card payment profile is a payment in which the total amount is paid in three instalments.

The third record relates to a card payment profile of "credit x10" type with one criterion field specifying a range of amount (Amount greater than four hundred Euros) and a priority level set to 5. A "credit x10" card payment profile is a payment in which the total amount is paid in ten instalments.

The fourth record relates to a card payment profile of "debit" type with two criterion fields and a priority level set to 4. The first criterion field specifies that the merchant type is Gas station while the second criterion field specifies range of amount (Amount lower than eighty Euros).

The fifth record relates to a card payment profile of "credit x3" type with two criterion fields and a priority level set to 1. The first criterion field specifies that the merchant type is Supermarket while the second criterion field specifies that the identifier of the merchant is ABCDXYZ.

In the example of Figure 4, the priority level equal to one is assumed to be the highest level.

Turning back to Figure 2, assuming that the card 10 is involved in a payment transaction for purchasing goods in a supermarket whose identifier is QWERTYONLY for an amount of 500 Euros on the date of April 29.

The selection engine 53 may get the merchant type, the merchant identifier, the transaction date and the transaction amount as transaction parameters intrinsic to the payment transaction. Is to be noted that the selection engine 53 may get additional parameters and discard them when useless in view of the content of the payment profile repository 52.

Then by parsing the payment profile repository 52 as shown at Figure 4, the selection engine 53 may identify that only two records have selection criteria matching the transaction parameters: the second record because the transaction date is in the range "Between 22th and end of month" and the third record because the transaction amount is in the range "Amount greater than four hundred Euros".

In such a case, the selection engine 53 selects the second record since it has the highest priority level (2 compared to 5).

As a result, the selection engine 53 activates the card payment profile "Credit x3" that is identified in the target record (i.e. the second record in this case).

Assuming that the card 10 is now involved in a payment transaction for refueling in a gas station for an amount of 70 Euros.

The selection engine 53 may get the merchant type and the transaction amount as transaction parameters intrinsic to the payment transaction.

Then by parsing the payment profile repository 52 as shown at Figure 4, the selection engine 53 may identify that only one record has selection criteria matching the transaction parameters: the fourth record because the merchant type is gas station and the transaction amount is in the range "Amount lower than eighty Euros".

As a result, the selection engine 53 activates the card payment profile "Debit" that is identified in the target record (i.e. the fourth record in this case) without checking the priority level field.

Preferably, the selection engine 53 may be designed to use all transaction parameters that are available at the card side. In some embodiments, the selection engine 53 may be designed to use only a limited number among the transaction parameters that are available at the card side.

In some embodiments, when no target record has been identified in the payment profile repository by the selection engine 53, the selection engine 53 may be configured to activate a predefined default card payment profile belonging to the profile data set 51.

In some embodiments, the default card payment profile may have been specified by a specific indicator during a previous personalization phase of the card 10.

In some embodiments, the selection engine 53 may be configured to use as default card payment profile the card payment profile of the first record of the payment profile repository 52.

In some embodiments, the selection engine 53 may be configured to use as default card payment profile the card payment profile of the record having the highest priority level in the payment profile repository 52.

In some embodiments, the selection engine 53 may be configured to use the card payment profile activated during a payment transaction preceding the current payment transaction.

In some embodiments, the card may comprise an admin engine 55 configured to update the payment profile repository 52 according to a personalization data 61 provided by a portable device 60 communicably coupled to the card via the communication interface 19. The admin engine 55 may initiate establishment of a contactless communication channel with a portable device 60 like a phone, a tablet, a PDA or a laptop and request the personalization data 61 or wait for receipt of the a personalization data 61 through the contactless communication channel. In some embodiments, the contactless communication channel may be established on the initiative of the portable device 60.

The portable device 60 comprises a software application designed to allow a user to configure the content of the profile data set 51 and/or the content of the payment profile repository 52. The personalization data 61 may comprise one or more descriptions of card payment profile. The personalization data 61 may comprise an element allowing the card to create a new record in the payment profile repository 52.

Preferably, the portable device 60 and the card 10 belong to the same user and have been paired in a previous phase to share one or more secret values allowing securing the contactless communication channel.

In some embodiments, when no target record has been identified by the selection engine 53 in the payment profile repository, the selection engine 53 may be configured to automatically establish a wireless communication channel with the portable device 60 and to request a personalization data 61 from the portable device. Preferably, a card that communicates in contact mode with the POS terminal may put the transaction with the POS terminal on hold and establish a Bluetooth Low Energy^{©} (BLE) communication channel with the portable device and receive data through the BLE channel. Then the card may resume the payment transaction with the POS terminal by taking into account the data received through the BLE channel.

Thus, during the payment transaction, the card may receive an item from the portable device and dynamically update the profile data set 51 and/or the payment profile repository 52. Thanks to such a dynamic update, the card behavior may be changed during the payment transaction by taking into account either a choice made by the user through the portable device or a preset configuration data stored in the portable device.

In some embodiments, the selection engine 53 may be configured to establish a wireless communication channel with the portable device 60 then wait for a predefined duration before beginning to search for the target record in the payment profile repository. The predefined duration may be set between 5 and 50 seconds for instance. The waiting phase gives the opportunity to the portable device 60 to select and send a personalization data 61 and to the card 10 to update the content of the payment profile repository 52. The portable device 60 may be configured to retrieve payment profile data from a remote server when the wireless communication channel is established with the card.

When waiting for a predefined duration, the card may be configured to send periodically Waiting Time Extension (WTX) requests to the POS terminal to maintain the payment transaction alive.

In some embodiments, the portable device may receive a special offer from a remote hardware server and use the received special offer to identify an appropriate personalization data 61 accordingly. For instance, a free multi-maturity credit may be proposed to the user through a user interface of the portable device credit. Sending of the special offer by the remote hardware server may be triggered by receipt of an indication that a payment transaction started at a specific shop for instance. The indication that a payment transaction started may have been previously sent by the POS terminal to the remote hardware server through a convention communication network.

In some embodiments, the card may send to the portable device 60 one or more transaction parameters intrinsic to the payment transaction before starting the waiting phase. The portable device may use the received transaction parameter(s) to identify an appropriate personalization data 61 accordingly.

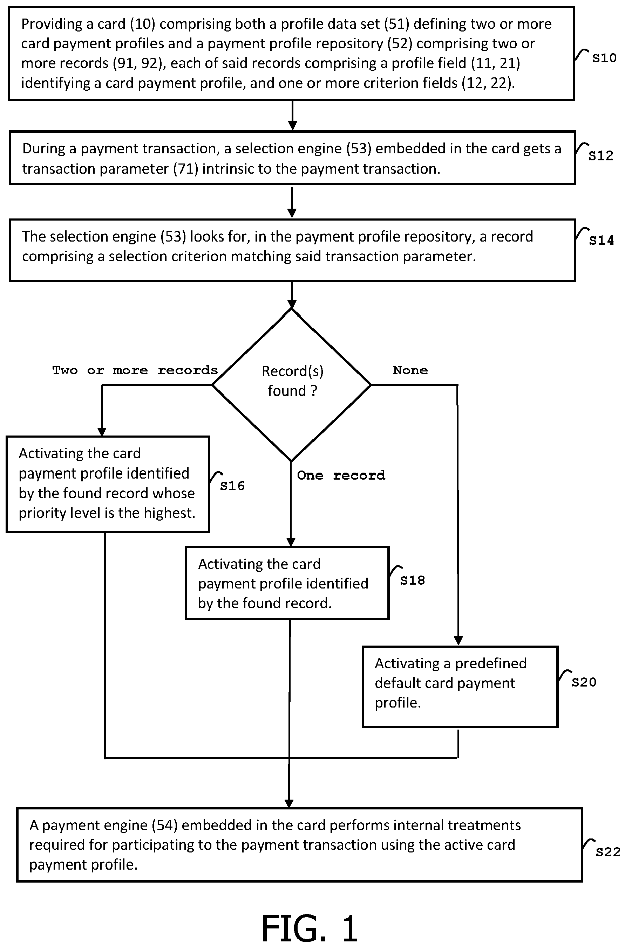

Figure 1 depicts an exemplary flow diagram for processing an operation in a payment card according to an example of the invention.

In this example, the payment card 10 is associated with a user (i.e. bank customer) for payment or cash withdrawal and may be implemented as any of the embodiments presented above. The payment card 10 may be similar to the one described at Figure 2.

In a preliminary step S10, the payment card 10 is provided to the user. The card 10 comprises both a profile data set 51 defining two or more card payment profiles and a payment profile repository 52 comprising at least two records. Each of said records comprise a profile field identifying a card payment profile, and one or more criterion field(s). Each of the criterion fields identifies a selection criterion. The card is adapted to have at most one activated card payment profile at a time.

At step S12, a payment transaction starts. The payment transaction involves the card 10 and a POS terminal 20 coupled to the card. A selection engine 53 embedded in the card gets, during the payment transaction, at least one transaction parameter 71 intrinsic to the payment transaction.

At step S14, the selection engine looks for in the payment profile repository a target record comprising a selection criterion matching the transaction parameter 71.

If only one record has been found, the selection engine activates the card payment profile identified by the target record comprising a selection criterion matching the transaction parameter 71. (Step S18)

If more than one record has been found, the selection engine selects as target record the record (among the found records) whose priority level is the highest and activates the card payment profile identified by the target record. (Step S16)

If no record has been found, the selection engine may activate a default card payment profile belonging to the profile data set 51. (Step S20)

Although not presented at Figure 1, the card may also connect a portable device 60 to request an update of the payment profile repository 52. In some embodiments, the connection may be trigged by the card when no record has been found by the selection engine 53. In some embodiments, the connection may be trigged by the card between step S12 and S14.

Once the selection engine has activated an appropriate card payment profile in the card, the payment engine 54 performs internal treatments required for participating to the payment transaction using the activated card payment profile at step S22.

In some embodiments, if the selection engine 53 found no target record, the selection engine may not activate a card payment profile; in this case, the card uses the card payment profile that was activated in the card before the start of the payment transaction.

In some embodiments, the card user may be provided with a personalization application (hosted on a hardware computer or a phone for instance) that allows customizing the selection criteria and priority levels stored in the payment profile repository 52 of the card. When customizing the card content with a personalization application hosted by a smartphone, the card may be powered by a BLE-capable portable reader that may establish a BLE session between a contact card and the smartphone.

In some embodiments, the content of the payment profile repository 52 may be loaded into the card during a personalization stage before the card issuance.

Thanks to some embodiments of the invention, it is possible to dynamically configure the payment profile used by the payment card without interaction with remote machines. Such embodiments allow to quickly and smoothly adapt the behavior of the payment card according to preference previously defined and stored in the card. In addition, the card knows which card payment profile was used for the transaction and can keep track of it for further analysis or security reasons.

Thanks to some embodiments of the invention, it is possible to dynamically configure the payment profile used by the payment card without needing the deployment of new hardware devices at Point-Of-Sale side.

Thanks to some embodiments of the invention, the user can have the opportunity to accept special payment conditions customized for a specific merchant or purchasing type.

Thanks to some embodiments of the invention, evolving payment conditions/profile can be automatically taken into account by the payment card during a payment transaction according to temporary or long-term commercial proposals offered by a set of stores.

Some embodiments of the invention allow avoiding the problem of collecting and recycling hardware components of old payment cards (in the case where a new physical payment card would be built, replacing the existing one).

The card payment profiles are not limited to the list presented above. In some embodiments, the card payment profiles may encompass different payment schemes or usage of different currencies.

The invention is not limited to the described embodiments or examples. In particular, the described features of the presented embodiments may be combined as can be understood by those skilled in the art.

The invention is not limited to payment smart cards and may apply to payment cards having different form factors like a connected-watch and to digital payment cards hosted in hardware devices like smartphones.

## Claims

1. A card (10) comprising a hardware processor and a memory and able to participate to a payment transaction with a terminal (20) coupled to the card,
wherein the card comprises a profile data set (51) defining two or more card payment profiles, the card being configured to have at most one activated card payment profile at any given time;
wherein the card comprises a payment profile repository (52) comprising two or more records (91, 92), each of said records comprising a profile field (11, 21) identifying a card payment profile belonging to the profile data set, and one or more criterion fields (12, 22), each of the criterion fields identifying a selection criterion;
wherein the card comprises a selection engine (53) configured to get, during said payment transaction, a transaction parameter (71) intrinsic to said payment transaction, to identify, in the payment profile repository, a target record comprising a selection criterion matching said transaction parameter and to activate the card payment profile identified by the target record; and
wherein the card comprises a payment engine (54) configured to perform internal treatments required for participating to the payment transaction using the activated card payment profile.

2. The card according to claim 1, wherein the activated card payment profile is one of the group comprising: immediate debit, deferred debit, purse, short-term credit, a long-term credit and a multi-maturity credit.

3. The card according to claim 1, wherein the transaction parameter is one of the group comprising: an identifier of a merchant, a type of merchant, an amount, a date and a location.

4. The card according to claim 1, wherein the selection criterion is one of the group comprising: an identifier of a merchant, a type of merchant, a range of amounts, a range of dates, a range of times and a location list.

5. The card according to claim 1, wherein, when no target record has been identified in the payment profile repository, said selection engine (53) is configured to activate a predefined default card payment profile belonging to said profile data set.

6. The card according to claim 1, wherein the card comprises an admin engine (54) configured to update the payment profile repository according to a personalization data (61) provided by a portable device (60) communicably coupled to the card.

7. The card according to claim 6, wherein, when no target record has been identified in the payment profile repository, said selection engine (53) is configured to establish a wireless communication channel with a portable device (60) and to request said personalization data (61) from the portable device.

8. The card according to claim 6, wherein said selection engine (53) is configured to establish a wireless communication channel with a portable device (60) then wait for a predefined duration before beginning to identify the target record in the payment profile repository.

9. The card according to claim 1, wherein each record of the payment profile repository (52) comprises a priority field (13, 23) identifying a priority level and wherein, when at least two found records comprise a selection criterion matching the transaction parameter, the selection engine (53) is configured to activate the card payment profile identified by the found record whose priority level is the highest.

10. A method for managing card (10) participating to a payment transaction with a terminal (20) coupled to the card,
wherein the card comprises a profile data set (51) defining two or more card payment profiles, the card being configured to have at most one activated card payment profile at any given time;
wherein the card comprises a payment profile repository (52) comprising two or more records (91, 92), each of said records comprising a profile field (11, 21) identifying a card payment profile belonging to the profile data set, and one or more criterion fields (12, 22), each of the criterion fields identifying a selection criterion;
wherein the method comprises the steps:
- a selection engine (53) embedded in the card gets (S12), during said payment transaction, a transaction parameter (71) intrinsic to said payment transaction,
- the selection engine identifies (S14), in the payment profile repository, a target record comprising a selection criterion matching said transaction parameter,
- the selection engine activates (S18) the card payment profile identified by the target record; and
- a payment engine (54) embedded in the card performs (S22) internal treatments required for participating to the payment transaction using the activated card payment profile.

11. The method according to claim 10, wherein, when no target record has been identified in the payment profile repository, said selection engine (53) activates a predefined default card payment profile belonging to said profile data set.

12. The method according to claim 10, wherein the card comprises an admin engine (54) that updates the payment profile repository according to a personalization data (61) provided by a portable device (60) communicably coupled to the card.

13. The method according to claim 12, wherein, when no target record has been identified in the payment profile repository, said selection engine (53) establishes a wireless communication channel with a portable device (60) and requests said personalization data (61) from the portable device.

14. The method according to claim 12, wherein said selection engine (53) establishes a wireless communication channel with a portable device (60) then waits for a predefined duration before beginning to identify the target record in the payment profile repository.

15. The method according to claim 10, wherein each record of the payment profile repository (52) comprises a priority field (13, 23) identifying a priority level and wherein, when at least two found records comprise a selection criterion matching the transaction parameter, the selection engine (53) activates the card payment profile identified by the found record whose priority level is the highest.
